# EUROPÄISCHE PATENTSCHRIFT

(11) **EP 3 253 181 B1**
(45) Veröffentlichungstag und Bekanntmachung des Hinweises auf die Patenterteilung: **31.07.2019**
(21) Anmeldenummer: 16172973.6
(22) Anmeldetag: 03.06.2016
(51) Int. Cl.: H05B 33/08, H05B 37/02, H04B 3/54

(54) **VERFAHREN ZUR DATENKOMMUNIKATION ZWISCHEN EINEM SENDE-/EMPFANGSMODUL UND EINEM LED-MODUL AUFWEISEND ZUMINDEST EINE LED ODER ZWISCHEN EINEM SENDE-/EMPFANGSMODUL UND LED-MODULEN IN EINER REIHENSCHALTUNG MEHRERER LED-MODULE, AUFWEISEND JEWEILS ZUMINDEST EINE LED**
METHOD FOR DATA COMMUNICATION BETWEEN A TRANSMITTER/RECEIVER MODULE AND A LED MODULE COMPRISING AT LEAST ONE LED OR BETWEEN A TRANSMITTER/RECEIVER MODULE AND LED MODULES IN A SERIES CONNECTION OF A PLURALITY OF LED MODULES, EACH COMPRISING AT LEAST ONE LED
PROCÉDÉ POUR LA COMMUNICATION DE DONNÉES ENTRE UN MODULE D'ÉMISSION/RÉCEPTION ET UN MODULE LED COMPRENANT AU MOINS UNE LED OU ENTRE UN MODULE D'ÉMISSION/RÉCEPTION ET DES MODULES LED DANS UN BRANCHEMENT EN SÉRIE DE PLUSIEURS MODULES LED, COMPRENANT CHACUN AU MOINS UNE LED

(43) Veröffentlichungstag der Anmeldung: 06.12.2017
(73) Patentinhaber: Digital Elektronik GmbH, 5083 St. Leonhard/Salzburg (AT)
(72) Erfinder: Auer, Johannes, 5020 Salzburg (AT); Heizinger, Günter, 5280 Braunau am Inn (AT); Maderecker, Georg, 5061 Elsbethen (AT); Oberascher, Andreas, 5201 Seekirchen (AT); Schmiedlechner, Andreas, 5121 Ostermiething (AT); Steinbacher, Andreas, 5082 Grödig (AT)
(74) Vertreter: Karakatsanis, Georgios

(56) Entgegenhaltungen:
- WO-A1-2007/013003
- DE-A1-102013 001 194
- US-A1- 2012 080 944
- US-A1- 2015 115 809

## Beschreibung

Die vorliegende Erfindung bezieht sich auf ein Verfahren zur Datenkommunikation zwischen einem Sende-/Empfangsmodul und einem LED-Modul aufweisend zumindest eine LED oder zwischen einem Sende-/Empfangsmodul und LED-Modulen in einer Reihenschaltung mehrerer LED-Module, aufweisend jeweils zumindest eine LED, gemäß dem Oberbegriff des Patentanspruchs 1. Des Weiteren bezieht sich die Erfindung auf ein System nach Patentanspruch 14 zur Datenkommunikation zwischen einem Sende-/Empfangsmodul und einem LED-Modul aufweisend zumindest eine LED oder zwischen einem Sende-/Empfangsmodul und LED-Modulen in einer Reihenschaltung mehrerer LED-Module, aufweisend jeweils zumindest eine LED.

Ein LED-Modul nach dem Stand der Technik umfasst einen konstruktiven Aufbau, der als Leiterkarte ausgeführt sein kann, elektrische Anschlüsse, sowie eine oder mehrere LEDs die auf dem konstruktiven Aufbau aufgebracht bzw. auf der Leiterkarte bestückt sind. Zudem ist bekannt, dass LED-Module Schutzeinrichtungen gegen Überspannung, Überstrom oder Verpolung und/oder Linsen oder Reflektoroptiken aufweisen können. Ferner können LED-Module Bauteile zur Wärmespreizung und Wärmeabfuhr aufweisen.

Die Helligkeit einer LED ist direkt proportional zum Strom, der durch die LED fließt. Aus diesem Grund werden LEDs oder LED-Module, aufweisend jeweils zumindest eine LED in Reihe geschaltet, so dass gewährleistet ist, dass die LEDs im Rahmen üblicher Toleranzen die gleiche Leuchtkraft aufweisen. Hierbei entspricht der Spannungsabfall über den in Reihe geschalteten LEDs der Summe der einzelnen Spannungsabfälle über den einzelnen LEDs. Fällt eine LED in einer Reihenschaltung mehrerer LEDs oder LED-Module, aufweisend jeweils zumindest eine LED aus, wodurch in der Regel ein Kurzschluss verursacht wird, sinkt der Gesamt-Spannungsabfall um den Anteil des Spannungsabfalls über der ausgefallenen LED. Bei vielen in Reihe geschalteten LEDs oder LED-Modulen, aufweisend jeweils zumindest eine LED ist es aufgrund der Bauteiltoleranzen, der Einbausituation, der Alterung sowie weiterer Umwelteinflüsse (z.B. der Temperatur) nicht möglich, einen eindeutigen Rückschluss auf die Anzahl der ausgefallenen LEDs bzw. LED-Module zu schließen. Zudem ist die Ermittlung der Position einer ausgefallenen LED bzw. eines ausgefallenen LED -Moduls durch einfache Messung der Gesamtspannung nicht möglich.

Aus dem Stand der Technik bekannte so genannte Powerline-Systeme, d.h. Systeme zur Datenübertragung über Stromnetze, arbeiten mittels der vorhandenen DC oder AC Spannungsversorgungsleitungen von angeschlossenen Bauteilen. Wenn jedoch das aus dem Stand der Technik bekannte Konzept bei einem LED-Beleuchtungssystem, aufweisend mehrere in Reihe geschaltete LED-Module, aufweisend jeweils zumindest eine LED angewandt wird und eine uni- oder bidirektionale Datenübertragung zwischen jedem LED-Modul und einem Modem eines Sende-/Empfangsmoduls realisiert werden soll, können die LED-Module in nachteiliger Weise nicht mehr in Serie geschaltet werden, sondern benötigen nach dem Stand der Technik jeweils einen eigenen Stromregler (LED-Treiber) in Verbindung mit einer Powerline-Kommunikation. Die Stromregler wiederum müssten dann z.B. per Powerline auf der Systemspannung, die beispielsweise 48V DC betragen kann, den Status, beispielsweise den Ausfall eines LED-Moduls mitteilen. Ein derartiges System benötigt eine komplizierte Verdrahtung und ist teuer und ineffizient.

Aus der DE 10 2013 001194 A1 ist ein System mit einer LED-Vorschaltvorrichtung und mindestens einem LED-Modul bekannt, wobei das LED-Modul mit zumindest einer LED ausgestattet ist und eine Modul-Schaltung und zwei Versorgungs-Anschlüsse zum Anlegen einer Spannung und/oder eines Stroms umfasst. Hierbei ist zumindest einer der beiden Versorgungs-Anschlüsse zur Signalübertragung von dem LED-Modul zusätzlich an die Modul-Schaltung geschaltet. Die LED-Modul-Vorschaltvorrichtung ist ausgestattet mit einer Vorschalt-Schaltung und mit zwei Versorgungs-Anschlüssen zum Anlegen der Spannung (U) und/oder des Stroms an das zumindest eine LED-Modul, wobei zumindest einer der beiden Versorgungs-Anschlüsse zur Signalübertragung von einem angeschlossenen LED-Modul zusätzlich an die Vorschalt-Schaltung geschaltet ist.

Aus der US2015/115809 geht ein Verfahren zur Datenkommunikation zwischen einem Sende-/Empfangsmodul und einem LED-Modul aufweisend zumindest eine LED oder zwischen einem Sende-/Empfangsmodul und LED-Modulen in einer Reihenschaltung mehrerer LED-Module, aufweisend jeweils zumindest eine LED, hervor. Bei dem bekannten Verfahren wird das zumindest eine LED-Modul von einem Stromregler über eine Stromleitung mit Strom versorgt, wobei mittels eines in das zumindest eine LED-Modul integrierten integrierten Schaltkreises zur Datenübertragung vom zumindest einen LED-Modul zu einem dem Stromregler nachgeschalteten, mit dem Sende-/ Empfangsmodul verbundenen Modem Daten auf die Stromleitung aufmoduliert werden und vom Modem demoduliert werden, wobei zur Datenübertragung vom Modem zum zumindest einen LED-Modul Daten auf die Stromleitung aufmoduliert und vom integrierten Schaltkreis demoduliert werden.

Ferner ist aus der WO 2007/013003 A1 ein Beleuchtungssystem bekannt mit zumindest einer elektrischen Stromversorgung mit einer Systemsteuerungseinheit zur Abgabe eines elektrischen Stroms mit modulierten Befehlsdaten, sowie einer Mehrzahl von Beleuchtungseinheiten, die mit der Stromversorgung in Reihe geschaltet sind, wobei jede der Beleuchtungseinheiten zumindest eine Lichtquelle, steuerbare Überbrückungsmittel, um die Lichtquelle selektiv zu überbrücken, sowie eine Steuereinheit umfasst, um die modulierten Befehlsdaten zu empfangen und die Überbrückungsmittel gemäß den Befehlsdaten zu steuern.

Der vorliegenden Erfindung liegt die Aufgabe zugrunde, ein Verfahren zur Datenkommunikation zwischen einem Sende-/Empfangsmodul und einem LED-Modul aufweisend zumindest eine LED oder zwischen einem Sende-/Empfangsmodul und LED-Modulen in einer Reihenschaltung mehrerer LED-Module, aufweisend jeweils zumindest eine LED, insbesondere ein Verfahren zur Ermittlung defekter LEDs und/oder defekter LED-Module anzugeben, zu dessen Durchführung lediglich ein einziger Stromregler, d.h. ein einziger LED-Treiber benötigt wird. Des Weiteren soll ein System zur Datenkommunikation zwischen einem Sende-/Empfangsmodul und einem LED-Modul aufweisend zumindest eine LED oder zwischen einem Sende-/Empfangsmodul und LED-Modulen in einer Reihenschaltung mehrerer LED-Module, aufweisend jeweils zumindest eine LED, insbesondere ein System zur Durchführung des erfindungsgemäßen Verfahrens angegeben werden.

Diese Aufgabe wird für ein Verfahren durch die Merkmale des Patentanspruchs 1 gelöst. Ein System ist Gegenstand des Patentanspruchs 14.

Weitere Ausgestaltungen und Vorteile gehen aus den entsprechenden Unteransprüchen hervor.

Demnach wird ein Verfahren zur Datenkommunikation zwischen einem Sende-/Empfangsmodul und einem LED-Modul aufweisend zumindest eine LED oder zwischen einem Sende-/Empfangsmodul und LED-Modulen in einer Reihenschaltung mehrerer LED-Module, aufweisend jeweils zumindest eine LED, wobei das zumindest eine LED-Modul von einem Stromregler über eine Stromleitung mit Strom versorgt wird vorgeschlagen, im Rahmen dessen mittels eines in das zumindest eine LED-Modul integrierten integrierten Schaltkreises zur Datenübertragung vom zumindest einen LED-Modul zu einem dem Stromregler nachgeschalteten, mit dem Sende-/Empfangsmodul verbundenen Modem Daten auf die Stromleitung aufmoduliert werden und vom Modem demoduliert werden, wobei zur Datenübertragung vom Modem zum zumindest einen LED-Modul Daten auf die Stromleitung aufmoduliert und vom integrierten Schaltkreis demoduliert werden. Das Sende-/Empfangsmodul kann beispielsweise mit einem Computer und/oder weiteren elektronischen Geräten, wie beispielsweise mit einer Anzeigevorrichtung verbunden sein, um eine Überwachung und/oder Steuerung der LED-Module zu realisieren.

Der in das zumindest eine LED-Modul integrierte integrierte Schaltkreis wird gemäß der Erfindung durch einen Spannungsabfall über einer LED des LED-Moduls mit Strom versorgt. Dieser Konzeption liegt die Erkenntnis zugrunde, dass der Spannungsabfall über einer LED eines LED-Moduls bei sich änderndem Strom relativ konstant bleibt und in der Größenordnung von 2 - 3V liegt, wobei integrierte Schaltkreise in diesem Spannungsbereich betrieben werden können. Im Rahmen einer optionalen Ausgestaltung kann die Versorgungspannung des integrierten Schaltkreises mittels einer in das LED-Modul integrierten Diode entkoppelt und mit einem in das LED-Modul integrierten Kondensator gepuffert werden, sodass bei kurzzeitigen Unterbrechungen der Stromzufuhr zum LED-Modul die Versorgung des integrierten Schaltkreises und weiterer erforderlicher Komponenten sichergestellt ist.

Gemäß der Erfindung wird der in das zumindest eine LED-Modul integrierte integrierte Schaltkreis durch Energy Harvesting mittels einer Solarzelle, einer Photodiode oder eines Seebeck(Peltier)-Elementes mit Strom versorgt. In ein LED-Modul integrierte weitere Verbraucher, wie z.B. aktive elektrische Bauelemente können gemäß der Erfindung mittels der erwähnten Anordnungen ebenfalls mit Strom versorgt werden.

Gemäß weiterer Varianten können in ein LED-Modul mehrere integrierte Schaltkreise integriert sein; beispielsweise kann jeder LED eines LED-Moduls ein integrierter Schaltkreis zugeordnet sein, der durch den Spannungsabfall über dieser LED mit Strom versorgt wird.

Gemäß der Erfindung werden die Daten vom zumindest einen LED-Modul zum Modem durch eine Änderung des Spannungsabfalls über dem LED-Modul auf die Stromleitung aufmoduliert. Hierbei kann die Änderung des Spannungsabfalls über dem LED-Modul über eine Änderung des Spannungsabfalls über einer LED des LED-Moduls durch periodischen Kurzschluss der LED über einen Schalter, einen Transistor, einen Feldeffekttransistor oder ein weiteres aktives elektrisches Bauelement, welches in das LED-Modul integriert ist, oder durch periodisches Bypassen vom Strom parallel zur LED über einen parallelen Widerstand oder eine Stromsenke erfolgen.

Alternativ kann im Rahmen einer weiteren Ausgestaltung die Änderung des Spannungsabfalls über einem LED-Modul zum Zweck des Aufmodulierens der Daten auf die Stromleitung mittels einer periodischen Überbrückung eines in das LED-Modul integrierten, in Reihe zu der zumindest einen LED geschalteten Shunt-Elementes oder mittels einer periodischen Überbrückung eines Widerstandes, einer Diode oder eines weiteren aktiven elektrischen Bauelementes mittels eines Feldeffekttransistors, eines Transistors, eines Optokopplers, eines Thyristors oder eines weiteren aktiven elektrischen Bauelementes welches in das LED-Modul integriert ist, erfolgen. Besonders vorteilhaft ist es, wenn zum Zweck der Modulation eine zusätzliche Spannung zum Spannungsabfall über der zumindest einen LED des LED-Moduls dadurch erzeugt wird, dass ein in das LED-Modul integrierter Feldeffekttransistor durchgeschaltet oder deaktiviert wird, wobei eine Body-Diode des Feldeffekttransistors die Gesamtspannung um eine durch die Bodydiode vorgegebene zusätzliche Spannung erhöht, wobei wenn keine Datenübertragung stattfindet, der Feldeffekttransistor durchgeschaltet ist, so dass die Gesamtspannung nicht verändert wird und wobei eine Änderung der Gesamtspannung mittels der Ansteuerung des Feldeffekttransistors erzielt wird.

Gemäß einer Ausgestaltung der Erfindung werden die vom zumindest einen LED-Modul zum Modem zu übertragenden Daten mittels FSK (Frequency-Shift- Keying) moduliert, wobei vorzugsweise eine logische Eins mit 10kHz und eine logische Null mit 9kHz kodiert wird. Für den Fall, dass eine Änderung des Spannungsabfalls über der LED mittels einer periodischen Überbrückung eines in das zumindest eine LED-Modul integrierten Shunt-Elementes oder mittels einer periodischen Überbrückung eines Widerstandes, einer Diode oder eines weiteren aktiven elektrischen Bauelementes mittels eines Feldeffekttransistors, eines Transistors, eines Optokopplers, eines Thyristors oder eines weiteren aktiven elektrischen Bauelementes erfolgt, werden die elektrischen Bauelemente, beispielsweise Feldeffekttransistoren, vom integrierten Schaltkreis der LED-Module zum Zweck der Datenmodulation mit 9 oder 10 kHz angesteuert.

Zur Demodulation wird das aufmodulierte Signal gleichspannungsentkoppelt, wobei dies vorzugsweise mittels eines Kondensators erfolgt und wobei im Rahmen weiterer Ausgestaltungen eine weitere, beispielsweise induktive oder optische Entkopplung durchgeführt werden kann, wobei mittels eines nachgeschalteten Bandpass-Filters, das für den Fall einer FSK Modulationsart mit 9 oder 10 kHz auf eine Mittenfrequenz von 9,5kHz dimensioniert ist, unerwünschte Frequenzanteile gedämpft werden, so dass nur die Nutzsignale mit einer Frequenz von 9 und 10 kHz passieren können, wobei mittels eines dem Bandpass-Filter nachgeschalteten Analog-Digital-Umsetzers das Nutzsignal gesampelt wird und eine schnelle Fourier-Transformation (FFT) durchgeführt wird. Im Rahmen weiterer Ausgestaltungen kann eine weitere, beispielsweise induktive oder optische Entkopplung durchgeführt werden kann. Im Rahmen weiterer Ausgestaltungen können weitere Modulationsarten gewählt werden; prinzipiell sind alle möglichen Modulationsarten durchführbar.

Im Rahmen weiterer Ausgestaltungen der Erfindung kann das modulierte Signal auch induktiv oder über eine Kapazität eingekoppelt werden.

Gemäß dem erfindungsgemäßen Verfahren werden die vom Modem zu dem zumindest einen LED-Modul zu übertragenden Daten mittels ASK (Amplitude-Shift Keying) moduliert, wobei zum Zweck der Modulation der vom Stromregler über die Stromleitung zu dem zumindest einen LED-Modul fließende Strom komplett unterbrochen und wieder aktiviert wird (d.h. der Modulationsgrad m beträgt 1), wobei die zu übertragenden Daten Manchester-Codiert werden, und wobei während der Datenübertragung der Spannungsabfall über einer LED des LED-Moduls an den integrierten Schaltkreis weitergegeben wird, welcher die übertragenen Daten somit direkt empfängt. Hierbei ist vorgesehen, dass während der Datenübertragung vom Modem zu dem zumindest einen LED-Modul der Nominalstrom des LED-Moduls linear angehoben wird, um einen Abfall der Lichtleistung der LEDs in dieser Zeit, der ca. 50% betragen kann, auszugleichen. Durch die dem Fachmann bestens bekannte Manchester-Codierung wird gewährleistet, dass eine lange folge von Nullen nicht zu einem Ausfall der integrierten Schaltkreise der LED-Module führen kann.

Im Rahmen weiterer Ausgestaltungen ist es möglich, analog zu der Datenübertragung von den LED-Modulen zum Modem, als Modulationsart FSK (Frequency-Shift- Keying) zu wählen, wobei in diesem Fall das Entkoppeln des Signals von der Gleichspannung, das Filtern, das Sampeln mittels eines Analog-Digital-Umsetzers und das Demodulieren mittels FFT in den integrierten Schaltkreisen der LED-Module erfolgt, die entsprechend ausgelegt sind.

Durch die beschriebene Konzeption wird eine digitale bidirektionale Kommunikation zwischen dem Modem und den LED-Modulen ohne die Notwendigkeit einer zusätzlichen Verkabelung ermöglicht.

Das zumindest eine LED-Modul wird eindeutig adressiert, wobei die eindeutige Adressierung auch manuell erfolgen kann. Im Fall einer Reihenschaltung mehrerer LED-Module ist die Adresse der LED-Module eine natürliche Zahl, die mit steigendem Abstand zum Stromregler entlang der Stromleitung betrachtet steigt. Beispielsweise weist das erste LED-Modul, d.h. das LED-Modul, welches am nächsten zum Stromregler angeordnet ist, die Adresse 1, das zweite LED-Modul die Adresse 2, das n-te LED-Modul die Adresse n auf usw.

Gemäß der Erfindung wird durch einen Broadcast-Befehl vom Modem ein Algorithmus zur Ausfallserkennung ausgelöst, wobei unmittelbar nach dem Auslösen des Algorithmus zur Ausfallserkennung in den LED-Modulen ein Timer für eine vorgegebene Zeit gestartet wird, dessen vorgegebene Zeit von der Adresse des LED-Moduls abhängt und somit eindeutig ist, wobei, wenn der Timer abläuft, das jeweilige LED-Modul Daten zum Status des LED-Moduls an das Modem überträgt, und wobei wenn vom einem LED-Modul zum Zeitpunkt des Ablaufs des Timers während eines zugehörigen Empfangszeitschlitzes des Algorithmus keine Daten zum Status des LED-Moduls empfangen werden, ein Ausfall oder ein Fehlen des LED-Moduls erkannt wird.

Wenn beispielsweise das erste LED-Modul, d.h. das LED-Modul, welches am nächsten zum Stromregler angeordnet ist, die Adresse 1, das zweite LED-Modul die Adresse 2, das n-te LED-Modul die Adresse n aufweist usw. meldet LED-Modul 1 seinen Status z.B. nach 1s meldet, LED-Modul 2 z.B. nach 2 Sekunden usw.

Für den Fall, dass ein LED-Modul mehrere LEDs aufweist, enthalten die von diesem LED-Modul zum Modem übertragenen Daten zum Status des LED-Moduls Daten zum Status der LEDs des LED-Moduls. Diese Daten können beispielsweise dadurch gewonnen werden, dass der Spannungsabfall über jeder LED des LED-Moduls vom integrierten Schaltkreis gemessen wird, wobei die LEDs innerhalb eines LED-Moduls eindeutig adressiert sind und wobei, wenn über einer LED kein Spannungsabfall gemessen wird, ein Ausfall dieser LED erkannt wird. Ferner können die Daten zum Status der LEDs eines LED-Moduls dadurch gewonnen werden, dass der Spannungsabfall über sämtliche LEDs vom integrierten Schaltkreis gemessen wird, wobei wenn der Spannungsabfall geringer ist als ein Sollwert, der dem Spannungsabfall entspricht, wenn keine LED ausgefallen ist, ein Ausfall zumindest einer LED erkannt wird und wobei die Anzahl der ausgefallenen LEDs dadurch ermittelt wird, dass die Differenz des gemessenen Spannungsabfalls zum Sollwert gebildet und durch den Spannungsabfall an einer intakten LED geteilt wird.

Die von zumindest einem LED-Modul zum Modem übertragenen Daten können auch Fehlermeldungen (Teilausfall, Laufzeit) und/oder Daten von Sensoren, beispielsweise von Helligkeitssensoren oder Temperatursensoren und/oder von weiteren Komponenten enthalten, die in das LED-Modul integriert sind oder an dieses angeschlossen sind und durch einen Spannungsabfall über einer oder mehreren LEDs des LED-Moduls oder durch Energy Harvesting mittels einer Solarzelle, einer Photodiode oder eines Seebeck(Peltier)-Elementes oder durch den Spannungsabfall an einem Shunt-Element oder mittels einer Batterie mit Strom versorgt werden.

Ein erfindungsgemäßes System zur Datenkommunikation zwischen einem Sende-/Empfangsmodul und einem LED-Modul aufweisend zumindest eine LED oder zwischen einem Sende-/Empfangsmodul und LED-Modulen in einer Reihenschaltung mehrerer LED-Module, aufweisend jeweils zumindest eine LED, wobei das zumindest eine LED-Modul von einem Stromregler über eine Stromleitung mit Strom versorgt wird, insbesondere ein System zur Durchführung des erfindungsgemäßen Verfahrens ist demnach dadurch gekennzeichnet, dass in das zumindest eine LED-Modul ein integrierter Schaltkreis integriert ist, mittels dessen zur Datenübertragung vom zumindest einen LED-Modul zu einem dem Stromregler nachgeschalteten, mit dem Sende-/Empfangsmodul verbundenen Modem Daten auf die Stromleitung aufmodulierbar und vom Modem demodulierbar sind, wobei zur Datenübertragung vom Modem zum zumindest einen LED-Modul Daten auf die Stromleitung aufmodulierbar und vom integrierten Schaltkreis demodulierbar sind. Hierbei wird der in jedes LED-Modul integrierte integrierte Schaltkreis durch Energy Harvesting mittels einer Solarzelle, einer Photodiode oder eines Seebeck(Peltier)-Elementes mit Strom versorgt, wobei in zumindest einem LED-Modul ein Sensor, ein Modul zur drahtlosen Datenkommunikation und/oder weitere Komponenten integriert sind, die durch Energy Harvesting mittels einer Solarzelle, einer Photodiode oder eines Seebeck(Peltier)-Elementes mit Strom versorgt werden und datentechnisch mit dem integrierten Schaltkreis verbunden sind. Jedes Modul ist dazu konfiguriert, dass durch einen Broadcast-Befehl vom Modem ein Algorithmus zur Ausfallserkennung auslösbar ist, wobei unmittelbar nach dem Auslösen des Algorithmus zur Ausfallserkennung in den LED-Modulen ein Timer für eine vorgegebene Zeit gestartet wird, dessen vorgegebene Zeit von der Adresse des LED-Moduls abhängt und somit eindeutig ist, wobei, wenn der Timer abläuft, das jeweilige LED-Modul Daten zum Status des LED-Moduls an das Modem überträgt, und wobei wenn vom einem LED-Modul zum Zeitpunkt des Ablaufs des Timers während eines zugehörigen Empfangszeitschlitzes des Algorithmus keine Daten zum Status des LED-Moduls empfangen werden, ein Ausfall oder ein Fehlen des LED-Moduls erkannt wird.

Hierbei sind gemäß weiterer Ausgestaltungen Daten vom zumindest einen LED-Modul zum Modem durch eine Änderung des Spannungsabfalls über dem LED-Modul auf die Stromleitung aufmodulierbar, wobei die Änderung des Spannungsabfalls über dem LED-Modul über eine Änderung des Spannungsabfalls über einer LED des LED-Moduls durch periodischen Kurzschluss der LED über einen Schalter, einen Transistor, einen Feldeffekttransistor oder ein weiteres aktives elektrisches Bauelement, welches in das LED-Modul integriert ist oder durch periodisches Bypassen vom Strom parallel zur LED über einen parallelen Widerstand oder eine Stromsenke erzielbar ist.

Die Änderung des Spannungsabfalls über einem LED-Modul kann auch mittels einer periodischen Überbrückung eines in das LED-Modul integrierten Shunt-Elementes oder mittels einer periodischen Überbrückung eines Widerstandes, einer Diode oder eines weiteren aktiven elektrischen Bauelementes mittels eines Feldeffekttransistors, eines Transistors, eines Optokopplers, eines Thyristors oder eines weiteren aktiven elektrischen Bauelementes, welches in das LED-Modul integriert ist, erfolgen. Eine einzelne, unabhängig geschaltete LED ist im Sinne der Erfindung ein LED-Modul mit lediglich einer LED.

Im Rahmen einer besonders vorteilhaften Ausgestaltung des Systems ist in das zumindest eine LED-Modul ein Feldeffekttransistor integriert, wobei eine Body-Diode des Feldeffekttransistors die Gesamtspannung um eine durch die Body-Diode vorgegebene zusätzliche Spannung erhöht, wobei eine Änderung der Gesamtspannung d.h. eine zusätzliche Spannung zum Spannungsabfall über der zumindest einen LED des LED-Moduls mittels der Ansteuerung des Feldeffekttransistors erzielbar ist.

Wie im Rahmen der Figurenbeschreibung erläutert wird, kann zur automatischen Adressierung jedes LED-Modul einen Schalter aufweisen, durch dessen Schließen die Stromleitung hinter dem LED-Modul kurzgeschlossen wird, so dass die einem LED-Modul mit geschlossenem Schalter nachgeschalteten LED-Module nicht mit Strom versorgt werden.

Ferner kann vorgesehen sein, dass in zumindest einem LED-Modul ein Sensor, ein Modul zur drahtlosen Datenkommunikation und/oder weitere Komponenten integriert sind, die durch Energy Harvesting mittels einer Solarzelle, einer Photodiode oder eines Seebeck(Peltier)-Elementes oder mittels einer Batterie mit Strom versorgt werden. Ein Modul zur drahtlosen Datenkommunikation kann beispielsweise ein Bluetooth Low Energy- oder ein WLAN-Modul sein. Mittels des Moduls kann beispielsweise eine Verbindung zwischen dem Modul und einem portablen elektronischen Gerät, welches den Bluetooth Low Energy- oder einen WLAN Standard unterstützt, hergestellt werden.

Die Erfindung wird im Folgenden anhand der beigefügten Figuren beispielhaft näher erläutert. Es zeigen:
Figur 1: Eine schematische Darstellung einer Reihenschaltung mehrerer LED-Module;
Figur 2: Eine schematische Darstellung der Stromversorgung eines in ein LED-Modul integrierten integrierten Schaltkreises mittels des Spannungsabfalls über einer LED des LED-Moduls;
Figur 3: Eine schematische Darstellung einer weiteren Ausgestaltung der Stromversorgung eines in ein LED-Modul integrierten integrierten Schaltkreises mittels des Spannungsabfalls über einer LED des LED-Moduls;
Figur 4: Eine schematische Darstellung der Stromversorgung eines in ein LED-Modul integrierten integrierten Schaltkreises durch den Spannungsabfall an einem parallel zum integrierten Schaltkreis geschalteten Shunt-Element;
Figur 5: Eine schematische Darstellung einer Ausgestaltung eines LED-Moduls zum Aufmodulieren der an das Modem zu übertragenden Daten auf die Stromleitung durch eine Änderung des Spannungsabfalls mittels einer periodischen Überbrückung eines in ein LED-Modul integrierten Shunt-Elementes;
Figur 6: Eine schematische Darstellung einer Ausgestaltung eines LED-Moduls zum Aufmodulieren der an das Modem zu übertragenden Daten auf die Stromleitung durch die Ansteuerung eines Feldeffekttransistors, wobei eine Body-Diode des Feldeffekttransistors die Gesamtspannung um eine durch die Bodydiode vorgegebene zusätzliche Spannung erhöht;
Figur 7: Eine schematische Darstellung der Demodulation der von einem LED-Modul mittels FSK (Frequency-Shift-Keying) modulierten und an das Modem übermittelten Daten, wobei eine logische Eins mit 10kHz und eine logische Null mit 9kHz kodiert wird;
Figur 8: Eine schematische Darstellung der Modulation der vom Modem an ein LED-Modul zu übermittelnden Daten mittels ASK (Amplitude-Shift Keying);
Figur 9: Eine schematische Darstellung eines Teiles einer Reihenschaltung mehrerer LED-Module zur Veranschaulichung der Vorgehensweise zur Auto-Adressierung der LED-Module;
Figur 10: Eine schematische Darstellung eines Teiles einer Reihenschaltung mehrerer LED-Module zur Veranschaulichung einer Anordnung zur Überwachung des Status der LEDs; und
Figur 11: Eine schematische Darstellung eines Teiles einer Reihenschaltung mehrerer LED-Module zur Veranschaulichung einer weiteren Anordnung zur Überwachung des Status der LEDs.

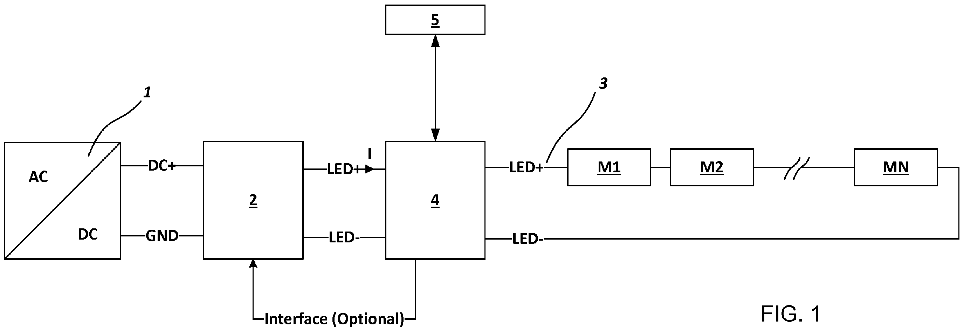

Gegenstand der Figur 1 ist eine Reihenschaltung mehrerer LED-Module M1, M2,...Mn. Die LED-Module, die jeweils zumindest eine LED umfassen, werden von einem AC/DC-Umwandler 1, dem ein Stromregler 2 nachgeschaltet ist, über eine Stromleitung 3 mit Strom versorgt. Gemäß der Erfindung werden Daten mittels eines in das zumindest eine LED-Modul M1, M2,.., Mn integrierten integrierten Schaltkreises vom zumindest einen LED-Modul M1, M2,.., Mn zu einem dem Stromregler 2 nachgeschalteten, mit einem Sende-/Empfangsmodul 5 verbundenen Modem 4 Daten auf die Stromleitung 3 aufmoduliert und vom Modem 4 demoduliert, wobei zur Datenübertragung vom Modem 4 zum zumindest einen LED-Modul M1, M2,..., Mn Daten auf die Stromleitung 3 aufmoduliert und vom integrierten Schaltkreis in den LED-Modulen demoduliert werden. Bei dem in Figur 1 gezeigten Beispiel ist das Modem 4 mittels einer Schnittstelle (Interface) mit dem Stromregler 2 verbunden.

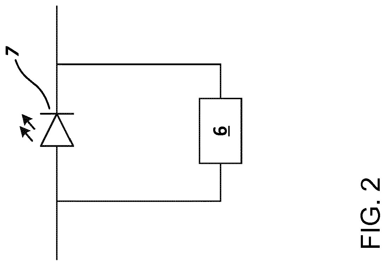

Gemäß einer besonders vorteilhaften Ausführungsform der Erfindung und bezugnehmend auf Figur 2 erfolgt die Stromversorgung der in den LED-Modulen integrierten integrierten Schaltkreise 6 mittels des Spannungsabfalls über einer LED 7 des jeweiligen LED-Moduls; der integrierte Schaltkreis 6 ist parallel zur LED 7 geschaltet. Analog zum integrierten Schaltkreis 6 können auch weitere Verbraucher, die in das LED-Modul integriert sein können, auf diese Weise mit Strom versorgt werden.

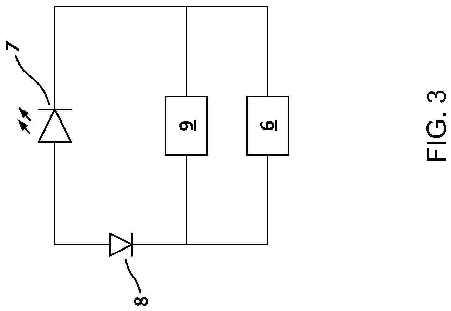

Gemäß einer Weiterbildung der Anordnung nach Figur 2 kann die Versorgungspannung des integrierten Schaltkreises 6 mittels einer in das LED-Modul integrierten Diode 8 entkoppelt und mit einem in das LED-Modul integrierten Kondensator 9 gepuffert werden, wodurch bei kurzzeitigen Unterbrechungen der Stromzufuhr zum LED-Modul die Versorgung des integrierten Schaltkreises und weiterer aktiver elektronischer Bauteile gewährleistet ist. Eine derartige Ausgestaltung ist Gegenstand der Figur 3.

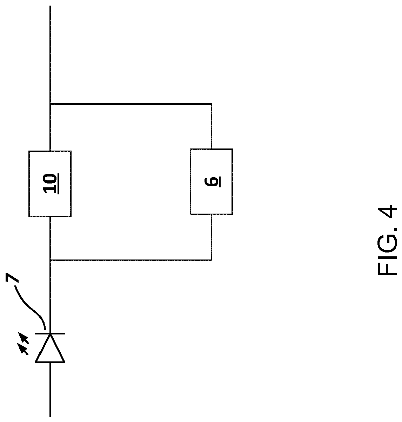

Eine weitere erfindungsgemäße Anordnung zur Stromversorgung eines integrierten Schaltkreises 6 ist in Figur 4 dargestellt. Hierbei wird der integrierte Schaltkreis 6 durch den Spannungsabfall an einem in Reihe zu einer LED geschalteten Shunt-Element 10 mit Strom versorgt.

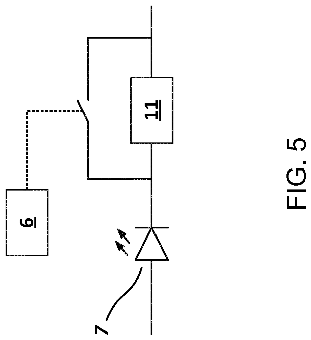

Gemäß der Erfindung werden Daten vom zumindest einen LED-Modul zum Modem durch eine Änderung des Spannungsabfalls über einer LED des LED-Moduls auf die Stromleitung aufmoduliert. Bei der in Figur 5 dargestellten Anordnung wird zum Zweck der Modulation eine zusätzliche Spannung zum Spannungsabfall über einer LED 7 eines LED-Moduls dadurch erzeugt, dass ein in das LED-Modul integriertes Shunt-Element 11, welches in Reihe zur LED 7 geschaltet ist, periodisch überbrückt wird.

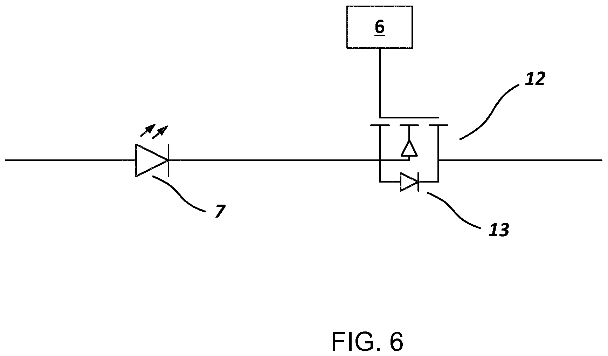

Bei dem in Figur 6 gezeigten Beispiel wird zum Zweck des Aufmodulierens der Daten auf die Stromleitung eine zusätzliche Spannung zum Spannungsabfall über der zumindest einen LED 7 eines LED-Moduls dadurch erzeugt, dass ein in das LED-Modul integrierter Feldeffekttransistor 12 durchgeschaltet oder deaktiviert wird, wobei eine Body-Diode 13 des Feldeffekttransistors 12 die Gesamtspannung um eine durch die Body-Diode 13 vorgegebene zusätzliche Spannung erhöht, wobei wenn keine Datenübertragung stattfindet, der Feldeffekttransistor 12 durchgeschaltet ist, so dass die Gesamtspannung nicht verändert wird. Eine Änderung der Gesamtspannung wird mittels der Ansteuerung des Feldeffekttransistors 12 durch den integrierten Schaltkreis erzielt.

Erfindungsgemäß können die vom zumindest einen LED-Modul zum Modem zu übertragenden Daten mittels FSK (Frequency-Shift- Keying) moduliert werden, wobei eine logische Eins mit 10kHz und eine logische Null mit 9kHz kodiert wird. Zu diesem Zweck wird bei der in Figur 6 gezeigten Anordnung der Feldeffekttransistor 12 vom integrierten Schaltkreis der LED-Module zum Zweck der Datenmodulation mit 9 oder 10 kHz angesteuert.

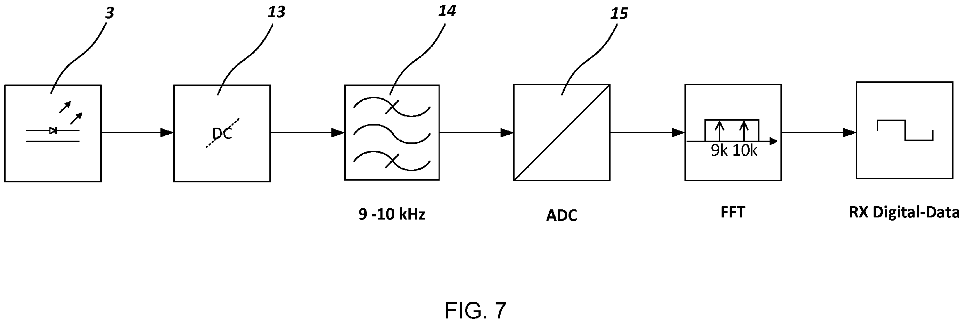

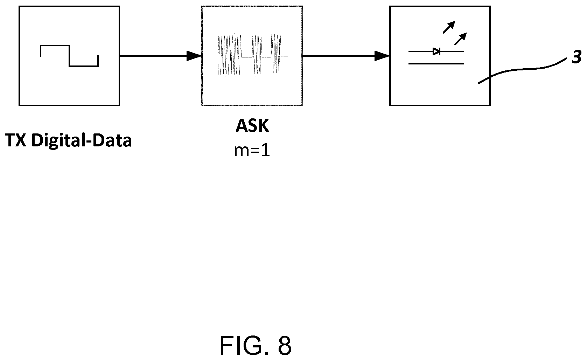

Zur Demodulation wird, wie anhand Figur 7 veranschaulicht, das von der Stromleitung 3 zum Modem übertragene Signal mittels eines Gleichspannungsentkopplers 13 gleichspannungsentkoppelt, wobei mittels dem eines dem Gleichspannungsentkoppler 13 nachgeschalteten Bandpass-Filters 14, das für den Fall einer FSK Modulationsart mit 9 oder 10 kHz auf eine Mittenfrequenz von 9,5kHz dimensioniert ist, unerwünschte Frequenzanteile gedämpft werden, so dass nur die Nutzsignale mit einer Frequenz von 9 und 10 kHz passieren können. Anschließend wird das Nutzsignal mittels eines dem Bandpass-Filter 14 nachgeschalteten Analog-Digital-Umsetzers 15 gesampelt und eine schnelle Fourier-Transformation (FFT) durchgeführt. Eine mögliche Modulation durch das Modem besteht darin, dass, wie anhand Figur 8 gezeigt, die vom Modem zu dem zumindest einen LED-Modul zu übertragenden Daten mittels ASK (Amplitude-Shift Keying) moduliert werden, wobei zum Zweck der Modulation der vom Stromregler über die Stromleitung 3 zu dem zumindest einen LED-Modul fließende Strom komplett unterbrochen und wieder aktiviert wird; der Modulationsgrad m beträgt hierbei 1.

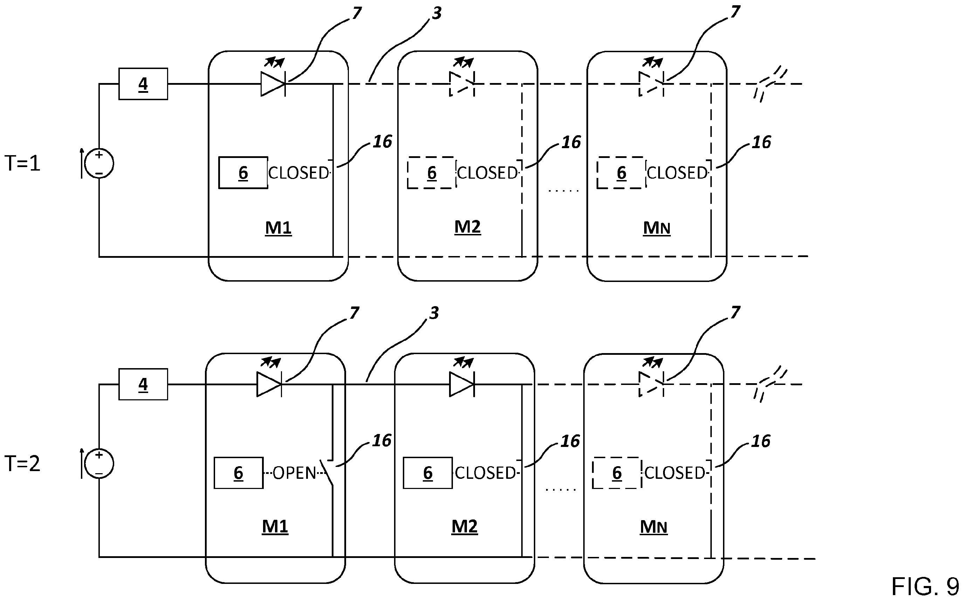

Die eindeutige Adressierung der LED-Module einer Reihenschaltung oder mehrerer unabhängig geschalteter Module, die mit dem Stromregler über eine Stromleitung verbunden sind, kann manuell erfolgen. Ferner können die LED-Module gemäß der Erfindung automatisch eindeutig adressiert werden, was anhand Figur 9 veranschaulicht wird. Zu diesem Zweck weist jedes LED-Modul M1, M2,...,Mn einen Schalter 16 auf, durch dessen Schließen die Stromleitung 3 hinter dem LED-Modul kurzgeschlossen wird, so dass die einem LED-Modul mit geschlossenem Schalter nachgeschalteten LED-Module nicht mit Strom versorgt werden. Das Modem 4 kann hierbei Befehle beinhaltend jeweils eine eindeutige Adresse broadcasten, die von nicht adressierten LED-Modulen empfangen werden, wobei wie folgt vorgegangen wird:
a) Schließen sämtlicher Schalter, so dass nur das entlang der Stromleitung 3 betrachtet dem Stromregler am nächsten befindliche LED-Modul M1 mit Strom versorgt wird;
b) Broadcasten eines Befehls beinhaltend eine eindeutige Adresse durch das Modem 4, welcher vom dem dem Stromregler entlang der Stromleitung 3 betrachtet am nächsten befindlichen LED-Modul M1 empfangen wird, welches die im Befehl enthaltene Adresse zugewiesen bekommt; Dies erfolgt bei dem in Figur 9 gezeigten Beispiel zum Zeitpunkt T=1.
c) Öffnen des Schalters 16 des zuletzt adressierten LED-Moduls, so dass das dem zuletzt adressierten LED-Modul unmittelbar nachgeschaltete LED-Modul mit Strom versorgt wird; In Figur 9 wird dies zum Zeitpunkt T=2 anhand des Öffnens des Schalters 16 des ersten LED-Moduls M1 dargestellt.
d) Broadcasten eines weiteren Befehls beinhaltend eine weitere eindeutige Adresse nach einer vorgegebenen Zeit, der von dem noch nicht adressierten und mit Strom versorgten dem zuletzt adressierten LED-Modul unmittelbar nachgeschalteten LED-Modul empfangen wird, welches die im Befehl enthaltene Adresse zugewiesen bekommt;
e) Wiederholen der Schritte c) und d) bis sämtliche LED-Module adressiert sind.

Wenn die LED-Module eindeutig adressiert sind, wird gemäß einer Ausgestaltung der Erfindung durch einen Broadcast-Befehl vom Modem 4 ein Algorithmus zur Ausfallserkennung ausgelöst, wobei unmittelbar nach dem Auslösen des Algorithmus zur Ausfallserkennung in den LED-Modulen ein Timer für eine vorgegebene Zeit gestartet wird, dessen vorgegebene Zeit von der Adresse des LED-Moduls abhängt und somit eindeutig ist, wobei, wenn der Timer abläuft, das jeweilige LED-Modul Daten zum Status des LED-Moduls an das Modem überträgt, und wobei wenn vom einem LED-Modul zum Zeitpunkt des Ablaufs des Timers während eines zugehörigen Empfangszeitschlitzes des Algorithmus keine Daten zum Status des LED-Moduls empfangen werden, ein Ausfall oder ein Fehlen des LED-Moduls erkannt wird.

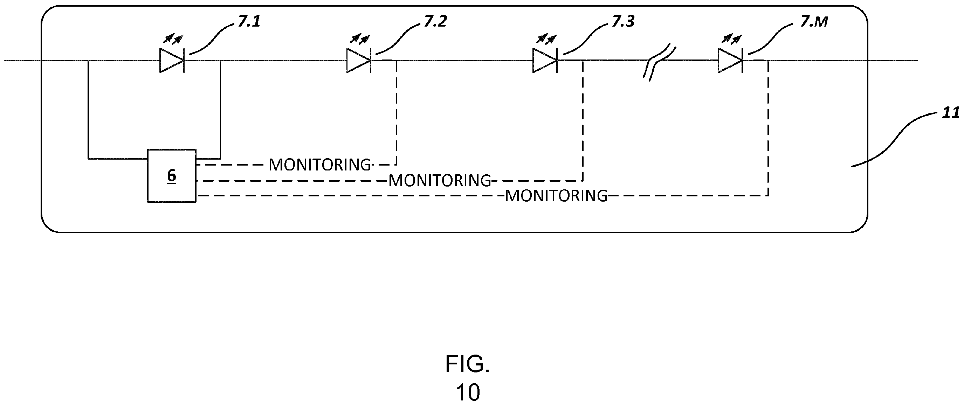

Wenn ein LED-Modul M mehrere LEDs aufweist, werden gemäß einer ersten Variante und bezugnehmend auf Figur 10 Daten zum Status der LEDs dadurch gewonnen, dass der Spannungsabfall über jeder LED 7.1, 7.2, ..., 7.n vom integrierten Schaltkreis 6 gemessen wird, wobei die LEDs innerhalb eines LED-Moduls M eindeutig logisch adressiert sind. Wenn über einer LED ein abnormaler Spannungsabfall gemessen wird, beispielsweise wenn kein Spannungsabfall gemessen wird oder wenn der gemessene Spannungsabfall außerhalb der Toleranzgrenzen eines Sollwerts liegt, der dem Spannungsabfall über einer intakten LED entspricht, wird ein Ausfall dieser LED erkannt, wobei anhand der eindeutigen Adresse der LED diese identifiziert und eine entsprechende Information an das Sende-/Empfangsmodul übermittelt werden kann. Das LED-Modul M kann z.B. ein einzelnes, mit dem Stromregler verbundenes Modul sein.

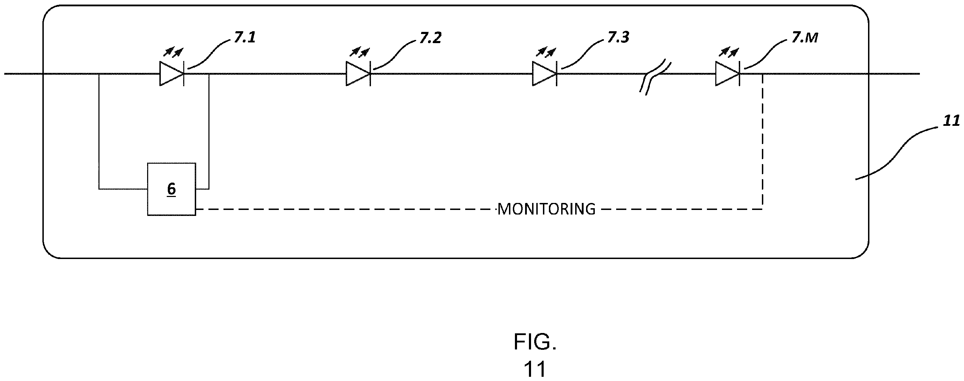

Alternativ dazu und bezugnehmend auf Figur 11 wird der Spannungsabfall über sämtliche LEDs 7.1, 7.2, ..., 7.n des LED-Moduls M vom integrierten Schaltkreis 6 gemessen, wobei wenn der Spannungsabfall außerhalb der Toleranzgrenzen eines Sollwerts liegt, der dem Spannungsabfall entspricht, wenn keine LED ausgefallen ist, ein Ausfall zumindest einer LED erkannt wird und wobei die Anzahl der ausgefallenen LEDs dadurch ermittelt wird, dass die Differenz des gemessenen Spannungsabfalls zum Sollwert gebildet und durch den Sollwert für den Spannungsabfall an einer intakten LED geteilt wird.

Gemäß einer weiteren Ausgestaltung der Erfindung wird in vorgegebenen, periodischen Abständen durch den in das zumindest eine LED-Modul M, M1, M2, Mn integrierten integrierten Schaltkreis 6 der Status der zumindest einen LED 7 und wenn Sensoren oder weitere Komponenten in das LED-Modul M, M1, M2, Mn integriert sind oder an dieses angeschlossen sind, der Status der Sensoren und/oder der weiteren Komponenten überprüft, wobei, wenn eine Fehlfunktion detektiert wird, eine Fehlermeldung generiert und zusammen mit der Adresse des LED-Moduls M, M1, M2, Mn an das Modem 4 übermittelt wird.

Ferner kann vorgesehen sein, dass durch den in das zumindest eine LED-Modul M, M1, M2, Mn integrierten integrierten Schaltkreis 6 die Signale von optional in zumindest ein LED-Modul M, M1, M2, Mn integrierten oder an zumindest ein LED-Modul M, M1, M2, Mn angeschlossenen Sensoren kontinuierlich oder in periodischen vorgegebenen Abständen ausgewertet werden, wobei, wenn Schwellenwerte für die Signale der Sensoren unter-/ oder überschritten werden, eine entsprechende Mitteilung generiert und zusammen mit der Adresse des LED-Moduls M, M1, M2, Mn an das Modem 4 übermittelt wird. Dadurch, dass die Adresse übermittelt wird, kann das LED-Modul auf einfache Weise lokalisiert werden, wodurch z.B. ein im Falle eines Temperatursensors oder eines Rauchmelders ein Brandherd oder für den Fall einer Lichtschranke eine Person lokalisiert werden kann. Wenn als Sensoren Mikrofone verwendet werden, kann beispielsweise ermittelt werden, ob und wo ein Schuss abgefeuert worden ist. Vom Sende-/Empfangsmodul 5 kann die Mitteilung an eine Steuerung weitergeleitet werden, welche die zumindest eine LED des jeweiligen LED-Moduls M, M1, M2, Mn und optional eine Kamera einschaltet, wenn sie zu diesem Zeitpunkt ausgeschaltet ist; ferner kann die Mitteilung mittels einer Anzeigevorrichtung angezeigt werden, um eine Bedienperson zu informieren.

Die von einem LED-Modul übertragbaren Daten können auch von optional in LED-Modulen vorgesehenen Modulen zur drahtlosen Datenkommunikation empfangenen Daten umfassen; die vom Sende-/Empfangsmodul an ein LED-Modul übertragbaren Daten können beispielsweise Befehle zur Steuerung des LED-Moduls auch anhand der Signale eines optional in ein LED-Modul integrierten oder an ein LED-Modul angeschlossenen Sensors, zur Steuerung eines in ein LED-Modul integrierten oder an ein LED-Modul angeschlossenen Sensors oder zur Steuerung eines Moduls zur drahtlosen Datenkommunikation umfassen.

Im Rahmen einer weiteren Ausgestaltung erfolgt die Auswertung der Signale der Sensoren in einem mit dem Sende-/Empfangsmodul verbundenen Computer, wobei in diesem Fall die Daten der Sensoren mittels des erfindungsgemäßen Verfahrens über das Modem und das Sende-/Empfangsmodul an den Computer übermittelt werden.

Gemäß einer Weiterbildung kann vorgesehen sein, dass wenn Schwellenwerte für die Signale der in ein LED-Modul M, M1, M2, Mn integrierten oder an ein LED-Modul M, M1, M2, Mn angeschlossenen Sensoren unter-/ oder überschritten werden, die zumindest eine LED 7 des LED-Moduls M, M1, M2, Mn vom integrierten Schaltkreis 6 eingeschaltet wird, wenn sie zu diesem Zeitpunkt ausgeschaltet ist.

Die Sensoren können beispielsweise als Luftqualitätssensoren, als Rauchmelder, als Temperatursensoren, als Feuchtigkeitssensoren, als Mikrofone, als Lichtschranken, als Magnetometer, als Gassensoren, als Bewegungssensoren, als Distanzsensoren, als Drucksensoren, als Durchflusssensoren, als Stromsensoren, als Füllstandssensoren, als Feuchtesensoren, als Regensensoren, als Lichtsensoren, als Näherungssensoren, als Temperatursensoren, als Strahlungsdetektoren, als Sensoren für Sprengstoff, als Beschleunigungssensoren, als seismische Sensoren, als Bildsensoren oder als Radarsensoren bzw. als Sensoren zur Detektion von Personen oder beweglichen Objekten ausgeführt sein.

Ferner kann ein in ein LED-Modul integrierter oder an ein LED-Modul angeschlossener Sensor als Helligkeitssensor ausgeführt sein, welcher den von einer LED des LED-Moduls emittierten Lichtstrom erfasst. Nimmt der von einer LED emittierte Lichtstrom kontinuierlich mit der Zeit ab, wird dies als Alterung bezeichnet. Gemäß der Erfindung wird durch den Sensor der von einer LED eines LED-Moduls emittierte Lichtstrom kontinuierlich oder in vorgegebenen periodischen Abständen erfasst, wobei, wenn der Lichtstrom einen einstellbaren Sollwert unterschreitet, der Nominalstrom der zumindest einen LED des LED-Moduls angehoben wird, um den Rückgang der Lichtleistung als Alterungseffekt zu kompensieren. Hierbei ist in einem LED-Modul vorzugsweise ein Helligkeitssensor vorgesehen, der einer LED zugeordnet ist, die als Referenz-LED für den Alterungseffekt dient. Wenn der Lichtstrom der Referenz-LED einen einstellbaren Sollwert unterschreitet, wird der Nominalstrom sämtlicher LEDs des LED-Moduls angehoben; hierbei wird davon ausgegangen, dass der Abfall des von den LEDs emittierten Lichtstroms als Funktion der Zeit gleich für alle LEDs des LED-Moduls ist.

Der Nominalstrom der LED kann hierbei durch den integrierten Schaltkreis angehoben werden, wobei die Helligkeit der zumindest einen LED über eine hochfrequente Pulsweitenmodulation (PWM) gesteuert wird, wobei mittels des integrierten Schaltkreises die durch Bypassen des Stroms parallel zu der zumindest einen LED mittels eines Bypass-Elementes, welches beispielsweise als Feldeffekttransistor ausgeführt sein kann, durchgeführte Pulsweitenmodulation durch Steuerung des Bypass-Elementes derart steuerbar ist, dass ein Rückgang der Lichtleistung kompensiert wird.

Ferner kann vorgesehen sein, dass wenn der Lichtstrom einer LED eines LED-Moduls einen einstellbaren Sollwert unterschreitet, was durch einen in das LED-Modul integrierten Helligkeitssensor erfasst wird, über den integrierten Schaltkreis eine entsprechende Mitteilung auf die Stromleitung aufmoduliert, vom Modem demoduliert und an das Sende-/Empfangsmodul übermittelt wird, wobei mittels einer mit dem Sende-/Empfangsmodul verbundenen Steuerung der Stromregler angesteuert wird, um den Nominalstrom derart anzuheben, dass der Rückgang der Lichtleistung der zumindest einen LED als Alterungseffekt kompensiert wird. Demnach ist der Rückgang der Lichtleistung der zumindest einen LED durch eine datentechnisch mit dem LED-Modul und dem Stromregler verbundene Steuerung kompensierbar, wobei die Ansteuerung des Stromreglers durch die Steuerung anhand der vom mit dem integrierten Schaltkreis datentechnisch verbundenen Helligkeitssensor gelieferten Signale erfolgt, die durch den integrierten Schaltkreis auf die Stromleitung aufmodulierbar und vom Modem demodulierbar sind. Bei eine Reihenschaltung mehrerer LED-Module wird hierbei der Nominalstrom sämtlicher LEDs sämtlicher LED-Module angehoben; hierbei wird davon ausgegangen, dass der Abfall des von den LEDs emittierten Lichtstroms als Funktion der Zeit gleich für alle LEDs der LED-Module ist. In vorteilhafter Weise weist lediglich ein LED-Modul der Reihenschaltung einen Helligkeitssensor auf.

Gemäß der Erfindung können demnach Sensoren, die Module zur drahtlosen Datenkommunikation und/oder weitere Komponenten in zumindest einem LED-Modul integriert sein, datentechnisch mit dem integrierten Schaltkreis verbunden sein und durch einen Spannungsabfall über einer oder mehreren LEDs des LED-Moduls, durch Energy Harvesting mittels einer Solarzelle, einer Photodiode oder eines Seebeck(Peltier)-Elementes, durch den Spannungsabfall an einem Shunt-Element oder mittels einer Batterie mit Strom versorgt werden. Ferner können die Sensoren, die Module zur drahtlosen Datenkommunikation und/oder weitere Komponenten an zumindest ein LED-Modul angeschlossen, datentechnisch mit dem integrierten Schaltkreis verbunden sein und von der Stromleitung 3 mit Strom versorgt werden.

## Patentansprüche

1. Verfahren zur Datenkommunikation zwischen einem Sende-/Empfangsmodul (5) und einem LED-Modul (M) aufweisend zumindest eine LED (7) oder zwischen einem Sende-/Empfangsmodul (5) und LED-Modulen (M1, M2, Mn) in einer Reihenschaltung mehrerer LED-Module (M1, M2, Mn), aufweisend jeweils zumindest eine LED (7),
wobei jedes LED-Modul (M, M1, M2, Mn) von einem gemeinsamen gesteuerten Stromregler (2) über eine Stromleitung (3) mit Strom versorgt wird, wobei mittels eines in jedes LED-Modul (M, M1, M2, Mn) integrierten integrierten Schaltkreises (6) zur Datenübertragung vom jeweiligen LED-Modul (M, M1, M2, Mn) zu einem dem Stromregler (2) nachgeschalteten, mit dem Sende-/Empfangsmodul (5) verbundenen Modem (4) Daten auf die Stromleitung (3) aufmoduliert werden und vom Modem (4) demoduliert werden, wobei zur Datenübertragung vom Modem (4) zum jeweiligen LED-Modul (M, M1, M2, Mn) Daten auf die Stromleitung (3) aufmoduliert und vom integrierten Schaltkreis (6) demoduliert werden, wobei die Daten vom jeweiligen LED-Modul (M, M1, M2, Mn) zum Modem (4) durch eine Änderung des Spannungsabfalls über dem LED-Modul (M, M1, M2, Mn) auf die Stromleitung (3) aufmoduliert werden und wobei die vom Modem (4) zu dem jeweiligen LED-Modul (M, M1, M2, Mn) zu übertragenden Daten mittels ASK (Amplitude-Shift Keying) moduliert werden, wobei zum Zweck der Modulation der vom Stromregler (2) über die Stromleitung (3) zu dem jeweiligen LED-Modul (M, M1, M2, Mn) fließende Strom mit einem Modulationsgrad von m=1 moduliert wird, wobei die zu übertragenden Daten Manchester-Codiert werden, und wobei während der Datenübertragung der Spannungsabfall über einer LED (7) des LED-Moduls (M, M1, M2, Mn) an den integrierten Schaltkreis (6) weitergegeben wird, welcher die übertragenen Daten direkt empfängt, wobei jedes LED-Modul (M, M1, M2, Mn) eindeutig adressiert wird,
**dadurch gekennzeichnet, dass** das Verfahren folgende Schritte umfasst:
Lineares Anheben des Nominalstroms des mindestens einen LED-Moduls (M, M1, M2, Mn) während der
Datenübertragung vom Modem (4) zu dem zumindest einen LED-Modul (M, M1, M2, Mn), um einen Abfall der Lichtleistung in dieser Zeit auszugleichen,
Versorgen des in jedes LED-Modul (M, M1, M2, Mn) integrierten integrierten Schaltkreises (6) durch Energy Harvesting mittels einer Solarzelle, einer Photodiode oder eines Seebeck(Peltier)-Elementes mit Strom,
Auslösen durch einen Broadcast-Befehl vom Modem (4) eines Algorithmus zur Ausfallserkennung und
Starten unmittelbar nach dem Auslösen des Algorithmus zur Ausfallserkennung eines Timers für eine vorgegebene Zeit in jedem LED-Modul (M, M1, M2, Mn), wobei die vorgegebene Zeit von einer Adresse des jeweiligen LED-Moduls (M, M1, M2, Mn) abhängt und somit eindeutig ist, wobei, wenn der Timer abläuft, das jeweilige LED-Modul (M, M1, M2, Mn) Daten zum Status des LED-Moduls (M, M1, M2, Mn) an das Modem (4) überträgt, und wobei wenn vom einem LED-Modul (M, M1, M2, Mn) zum Zeitpunkt des Ablaufs des Timers während eines zugehörigen Empfangszeitschlitzes des Algorithmus keine Daten zum Status des LED-Moduls (M, M1, M2, Mn) empfangen werden, ein Ausfall oder ein Fehlen des LED-Moduls (M, M1, M2, Mn) erkannt wird.

2. Verfahren zur Datenkommunikation nach Anspruch 1, **dadurch gekennzeichnet, dass** die Änderung des Spannungsabfalls über dem LED-Modul (M, M1, M2, Mn) über eine Änderung des Spannungsabfalls über einer LED (7) des LED-Moduls (M, M1, M2, Mn) durch periodischen Kurzschluss der LED (7) über einen Schalter, einen Transistor, einen Feldeffekttransistor oder ein weiteres aktives elektrisches Bauelement oder durch periodisches Bypassen vom Strom parallel zur LED (7) über einen parallelen Widerstand oder eine Stromsenke erfolgt.

3. Verfahren zur Datenkommunikation nach Anspruch 1, **dadurch gekennzeichnet, dass** die Änderung des Spannungsabfalls über dem LED-Modul (M, M1, M2, Mn) mittels einer periodischen Überbrückung eines in das LED-Modul (M, M1, M2, Mn) integrierten Shunt-Elementes (10) oder mittels einer periodischen Überbrückung eines Widerstandes, einer Diode oder eines weiteren aktiven elektrischen Bauelementes mittels eines Feldeffekttransistors (12), eines Transistors, eines Optokopplers, eines Thyristors oder eines weiteren aktiven elektrischen Bauelementes erfolgt.

4. Verfahren zur Datenkommunikation nach Anspruch 3, **dadurch gekennzeichnet, dass** zum Zweck der Modulation eine zusätzliche Spannung zum Spannungsabfall über der zumindest einen LED (7) des LED-Moduls (M, M1, M2, Mn) dadurch erzeugt wird, dass ein in das zumindest eine LED-Modul (M, M1, M2, Mn) integrierter Feldeffekttransistor (12) durchgeschaltet oder deaktiviert wird, wobei eine Body-Diode (13) des Feldeffekttransistors (12) die Gesamtspannung um eine durch die Body-Diode (13) vorgegebene zusätzliche Spannung erhöht, wobei wenn keine Datenübertragung stattfindet, der Feldeffekttransistor (12) durchgeschaltet ist, so dass die Gesamtspannung nicht verändert wird und wobei eine Änderung der Gesamtspannung mittels der Ansteuerung des Feldeffekttransistors (12) erzielt wird.

5. Verfahren zur Datenkommunikation nach Anspruch 2, 3 oder 4, **dadurch gekennzeichnet, dass** die vom zumindest einen LED-Modul (M, M1, M2, Mn) zum Modem (4) zu übertragenden Daten mittels FSK (Frequency-Shift- Keying) moduliert werden, wobei eine logische Eins mit 10kHz und eine logische Null mit 9kHz kodiert wird.

6. Verfahren zur Datenkommunikation nach Anspruch 5, **dadurch gekennzeichnet, dass** das aufmodulierte Signal mittels eines Gleichspannungsentkopplers (13) gleichspannungsentkoppelt wird, wobei mittels eines nachgeschalteten Bandpass-Filters (14) unerwünschte Frequenzanteile gedämpft werden, so dass nur die Nutzsignale mit einer Frequenz von 9 und 10 kHz passieren können, wobei mittels eines dem Bandpass-Filter (14) nachgeschalteten Analog-Digital-Umsetzers (15) das Nutzsignal gesampelt wird und eine schnelle Fourier-Transformation durchgeführt wird, um das Signal zu demodulieren.

7. Verfahren zur Datenkommunikation nach Anspruch 1, **dadurch gekennzeichnet, dass** das modulierte Signal induktiv oder über eine Kapazität eingekoppelt wird.

8. Verfahren zur Datenkommunikation nach Anspruch 1, **dadurch gekennzeichnet, dass** für den Fall, dass ein LED-Modul (M1, M2, Mn) mehrere LEDs (7.1, 7.2, 7.n) umfasst, die von diesem LED-Modul (M1, M2, Mn) zum Modem (4) übertragenen Daten zum Status des LED-Moduls (M1, M2, Mn) Daten zum Status der LEDs (7.1, 7.2, 7.n) des LED-Moduls (M1, M2, Mn) enthalten.

9. Verfahren zur Datenkommunikation nach Anspruch 8, **dadurch gekennzeichnet, dass** Daten zum Status der LEDs (7.1, 7.2, 7.n) dadurch gewonnen werden, dass der Spannungsabfall über jeder LED (7.1, 7.2, 7.n) vom integrierten Schaltkreis (6) gemessen wird, wobei die LEDs (7.1, 7.2, 7.n) innerhalb eines LED-Moduls (M1, M2, Mn) eindeutig adressiert sind und wobei, wenn über einer LED (7.1, 7.2, 7.n) ein Spannungsabfall gemessen wird, der außerhalb der Toleranzgrenzen eines Sollwerts liegt, der dem Spannungsabfall über einer intakten LED entspricht, ein Ausfall dieser LED (7.1, 7.2, 7.n) erkannt wird oder dass der Spannungsabfall über sämtliche LEDs (7.1, 7.2, 7.n) vom integrierten Schaltkreis (6) gemessen wird, wobei wenn der Spannungsabfall außerhalb der Toleranzgrenzen eines Sollwerts, der dem Spannungsabfall entspricht, wenn keine LED (7.1, 7.2, 7.n) ausgefallen ist, ein Ausfall zumindest einer LED (7.1, 7.2, 7.n) erkannt wird und wobei die Anzahl der ausgefallenen LEDs (7.1, 7.2, 7.n) dadurch ermittelt wird, dass die Differenz des gemessenen Spannungsabfalls zum Sollwert gebildet und durch den Sollwert für den Spannungsabfall an einer intakten LED (7.1, 7.2, 7.n) geteilt wird.

10. Verfahren zur Datenkommunikation nach einem der vorangehenden Ansprüche, **dadurch gekennzeichnet, dass** die von zumindest einem LED-Modul (M, M1, M2, Mn) zum Modem (4) übertragenen Daten Fehlermeldungen und/oder Daten von Sensoren, von einem Modul zur drahtlosen Datenkommunikation und/oder von weiteren Komponenten enthalten, die in das LED-Modul (M, M1, M2, Mn) integriert sind oder an dieses angeschlossen sind und durch einen Spannungsabfall über einer oder mehreren LEDs (7) des LED-Moduls (M, M1, M2, Mn) oder durch Energy Harvesting mittels einer Solarzelle, einer Photodiode oder eines Seebeck(Peltier)-Elementes oder durch den Spannungsabfall an einem Shunt-Element oder mittels einer Batterie mit Strom versorgt werden.

11. Verfahren zur Datenkommunikation nach Anspruch 1, **dadurch gekennzeichnet, dass** in vorgegebenen, periodischen Abständen durch den in das zumindest eine LED-Modul (M, M1, M2, Mn) integrierten integrierten Schaltkreis (6) der Status der zumindest einen LED (7) und wenn Sensoren oder weitere Komponenten in das LED-Modul (M, M1, M2, Mn) integriert sind oder an dieses angeschlossen sind, der Status der Sensoren und/oder der weiteren Komponenten überprüft wird, wobei, wenn eine Fehlfunktion detektiert wird, eine Fehlermeldung generiert und zusammen mit der Adresse des LED-Moduls (M, M1, M2, Mn) an das Modem (4) übermittelt wird.

12. Verfahren zur Datenkommunikation nach Anspruch 1, **dadurch gekennzeichnet, dass** durch den in das zumindest eine LED-Modul (M, M1, M2, Mn) integrierten integrierten Schaltkreis (6) die Signale von in zumindest ein LED-Modul (M, M1, M2, Mn) integrierten oder an zumindest ein LED-Modul (M, M1, M2, Mn) angeschlossenen Sensoren kontinuierlich oder in periodischen vorgegebenen Abständen ausgewertet werden, wobei, wenn Schwellenwerte für die Signale der Sensoren unter-/ oder überschritten werden, eine entsprechende Mitteilung generiert und zusammen mit der Adresse des LED-Moduls (M, M1, M2, Mn) an das Modem (4) übermittelt wird.

13. Verfahren zur Datenkommunikation nach Anspruch 12, **dadurch gekennzeichnet, dass** wenn Schwellenwerte für die Signale der in ein LED-Modul (M, M1, M2, Mn) integrierten oder an ein LED-Modul (M, M1, M2, Mn) angeschlossenen Sensoren unter-/ oder überschritten werden, die zumindest eine LED (7) des LED-Moduls (M, M1, M2, Mn) vom integrierten Schaltkreis (6) eingeschaltet wird, wenn sie zu diesem Zeitpunkt ausgeschaltet ist.

14. System, umfassend ein LED-Modul (M), aufweisend zumindest eine LED (7), oder mehrere LED-Module (M1, M2, Mn) in einer Reihenschaltung mehrerer LED-Module (M1, M2, Mn), aufweisend jeweils zumindest eine LED (7), wobei in jedes LED-Modul (M, M1, M2, Mn) ein integrierter Schaltkreis (6) integriert ist, eine mit einem Stromregler (2) verbundene Stromleitung (3) zur Stromversorgung des LED-Moduls (M) bzw. der LED-Module (M1, M2, Mn) der Reihenschaltung, ein Sende-/Empfangsmodul (5) und ein dem Stromregler (2) nachgeschaltetes und mit dem Sende-/Empfangsmodul (5) verbundenes Modem (4), zur Datenkommunikation zwischen dem Sende-/Empfangsmodul (5) und dem LED-Modul (M) bzw. den LED-Modulen (M1, M2, Mn) der Reihenschaltung, wobei jedes LED-Modul (M, M1, M2, Mn) eindeutig adressiert ist, wobei zur Datenübertragung vom jeweiligen LED-Modul (M, M1, M2, Mn) zum Modem (4) Daten auf die Stromleitung (3) aufmodulierbar und vom Modem (4) demodulierbar sind, wobei zur Datenübertragung vom Modem (4) zum jeweiligen einen LED-Modul (M, M1, M2, Mn) Daten auf die Stromleitung (3) aufmodulierbar und vom integrierten Schaltkreis (6) demodulierbar sind, wobei der in jedes LED-Modul (M, M1, M2, Mn) integrierte integrierte Schaltkreis (6) durch Energy Harvesting mittels einer Solarzelle, einer Photodiode oder eines Seebeck(Peltier)-Elementes mit Strom versorgt wird, wobei in zumindest einem LED-Modul (M, M1, M2, Mn) ein Sensor, ein Modul zur drahtlosen Datenkommunikation und/oder weitere Komponenten integriert sind, die durch Energy Harvesting mittels einer Solarzelle, einer Photodiode oder eines Seebeck(Peltier)-Elementes mit Strom versorgt werden und datentechnisch mit dem integrierten Schaltkreis (6) verbunden sind,
**dadurch gekennzeichnet, dass** jedes LED-Modul (M, M1, M2, Mn) dazu konfiguriert ist, dass durch einen Broadcast-Befehl vom Modem (4) ein Algorithmus zur Ausfallserkennung auslösbar ist, wobei unmittelbar nach dem Auslösen des Algorithmus zur Ausfallserkennung in den LED-Modulen (M, M1, M2, Mn) ein Timer für eine vorgegebene Zeit gestartet wird, dessen vorgegebene Zeit von der Adresse des jeweiligen LED-Moduls (M, M1, M2, Mn) abhängt und somit eindeutig ist, wobei, wenn der Timer abläuft, das jeweilige LED-Modul (M, M1, M2, Mn) weiter dazu konfiguriert ist, Daten zum Status des LED-Moduls (M, M1, M2, Mn) an das Modem (4) zu übertragen, und wobei wenn vom einem LED-Modul (M, M1, M2, Mn) zum Zeitpunkt des Ablaufs des Timers während eines zugehörigen Empfangszeitschlitzes des Algorithmus keine Daten zum Status des LED-Moduls (M, M1, M2, Mn) empfangen werden, ein Ausfall oder ein Fehlen des LED-Moduls (M, M1, M2, Mn) erkannt wird.

15. System zur Datenkommunikation nach Anspruch 14, **dadurch gekennzeichnet, dass** der Sensor des zumindest einen LED-Moduls (M, M1, M2, Mn) als Sensor einer Gruppe umfassend Luftqualitätssensoren, Rauchmelder, Temperatursensoren, Feuchtigkeitssensoren, Mikrofone, Lichtschranken, Magnetometer, Gassensoren, Bewegungssensoren, Distanzsensoren, Drucksensoren, Durchflusssensoren, Stromsensoren, Füllstandssensoren, Feuchtesensoren, Regensensoren, Lichtsensoren, Helligkeitssensoren, Näherungssensoren, Temperatursensoren, Strahlungsdetektoren, Sensoren für Sprengstoff, Beschleunigungssensoren, seismische Sensoren, Bildsensoren und Radarsensoren bzw. Sensoren zur Detektion von Personen oder beweglichen Objekten ausgeführt ist.

## Claims

1. A method for data communication between a transmitter/receiver module (5) and an LED module (M) comprising at least one LED (7) or between a transmitter/receiver module (5) and LED modules (M1, M2, Mn) in a series connection of several LED modules (M1, M2, Mn) each comprising at least one LED (7), each LED module (M, M1, M2, Mn) being supplied with current from a common controlled current regulator (2) via a current supply line (3), wherein data is modulated onto the current supply line (3) by means of an integrated circuit (6) integrated into each LED module (M, M1, M2, Mn) for data communication from the respective LED module (M, M1, M2, Mn) to a modem (4) arranged downstream of the current regulator (2) and connected to the transmitter/receiver module (5), the data then being demodulated by the modem (4), wherein for data communication from the modem (4) to the respective LED module (M, M1, M2, Mn) data is modulated onto the current supply line (3) and demodulated by the integrated circuit (6), wherein the data from each LED module (M, M1, M2, Mn) to the modem (4) is modulated onto the current supply line (3) by means of changing the voltage drop across the LED module (M, M1, M2, Mn), and wherein the data to be transmitted from the modem (4) to the respective LED module (M, M1, M2, Mn) is modulated by means of ASK (amplitude shift keying), wherein for the purpose of modulation, the current flowing from the current regulator (2) via the current supply line (3) to the respective LED module (M, M1, M2, Mn) is modulated with a modulation depth of m=1, wherein the data to be transmitted is Manchester-coded and wherein during data transmission the voltage drop across one LED (7) of the LED module (M, M1, M2, Mn) is passed onto the integrated circuit (6) which directly receives the transmitted data, wherein each LED module (M, M1, M2, Mn) is unequivocally addressed, **characterised in that** the method comprises the following steps:
linearly increasing the nominal current of at least one LED module (M, M1, M2, Mn) during data transmission from the modem (4) to the at least one LED module (M, M1, M2, Mn) in order to compensate for a drop in light output during this time,
supplying each integrated circuit (6) integrated into each LED module (M, M1, M2, Mn) with current through energy harvesting by means of a solar cell, a photo diode or a Seebek (Peltier) element,
triggering an algorithm for failure detection by means of a broadcast command from the modem (4) and
starting a timer immediately upon triggering the algorithm for failure detection for a pre-set period of time in each LED module (M, M1, M2, Mn), wherein the pre-set period of time depends on an address of the respective LED module (M, M1, M2, Mn) and is thus unequivocal, wherein when the timer expires, the respective LED module (M, M1, M2, Mn) transmits data on the status of the LED module (M, M1, M2, Mn) to the modem (4), and wherein at the point in time that the timer expires, no data is received during an associated receive time slot of the algorithm on the status of the LED module (M, M1, M2, Mn), a failure or absence of the LED module (M, M1, M2, Mn) is detected.

2. The method for data communication according to claim 1, **characterised in that** the change in voltage drop across the LED module (M, M1, M2, Mn) is effected via a change in voltage drop across an LED (7) of the LED module (M, M1, M2, Mn), by means of periodically short-circuiting the LED (7) via a switch, a transistor, a field effect transistor or a further electrical component or by means of periodically bypassing the current parallel to the LED (7) via a parallel resistance or a current sink.

3. The method for data communication according to claim 1, **characterised in that** the change in voltage drop across the LED module (M, M1, M2, Mn) is effected by means of periodically bridging a shunt element (10) integrated into the LED module (M, M1, M2, Mn) or by means of periodically bridging a resistance, a diode or a further active electrical component by means of a field effect transistor (12), a transistor, an optical coupler, a thyristor or a further active electrical component.

4. The method for data communication according to claim 3, **characterised in that** for the purpose of modulation an additional voltage for a voltage drop across the at least one LED (7) of the LED module (M, M1, M2, Mn) is generated **in that** a field effect transistor (12) integrated into the at least one LED module (M, M1, M2, Mn) is switched through or deactivated, wherein a body diode (13) of the field effect transistor (12) increases the total voltage by an additional voltage defined by the body diode (13), wherein when no data transmission takes place, the field effect transistor (12) is switched through so that the total voltage is not changed and wherein a change in total voltage is achieved by means of controlling the field effect transistor (12).

5. The method for data communication according to claim 2, 3 or 4, **characterised in that** the data to be transmitted from the at least one LED module (M, M1, M2, Mn) to the modem (4) is modulated by means of FSK (frequency shift keying), wherein a logical one is coded with 10kHz and a logical zero is coded with 9kHz.

6. The method for data communication according to claim 5, **characterised in that** the modulated signal is DC-decoupled by means of a DC-decoupler (13), wherein undesirable frequency amounts are attenuated by means of a downstream band pass filter (14), so that only the useful signals with a frequency of 9 and 10 Hz can pass, wherein the useful signal is sampled by means of an analogue digital transducer (15) arranged downstream of the band pass filter (14), with a quick Fourier transformation being performed for demodulating the signal.

7. The method for data communication according to claim 1, **characterised in that** the modulated signal is coupled-in inductively or via a capacity.

8. The method for data communication according to claim 1, **characterised in that**, given the case that an LED module (M1, M2, Mn) comprises a number of LEDs (7.1, 7.2, 7.n), the data transmitted from this LED module (M, M1, M2, Mn) to the modem (4) on the status of the LED module (M1, M2, Mn) contains data on the status of the LEDs (7.1, 7.2, 7.n) of the LED module (M1, M2, Mn) .

9. The method for data communication according to claim 8, **characterised in that** data on the status of the LEDs (7.1, 7.2, 7.n) is obtained **in that** the voltage drop across each LED (7.1, 7.2, 7.n) is measured by the integrated circuit (6), wherein the LEDs (7.1, 7.2, 7.n) within one LED module (M1, M2, Mn) are unequivocally addressed and wherein, when a voltage drop is measured across an LED (7.1, 7.2, 7.n) which lies outside the tolerance limits of a set value, which corresponds to the voltage drop across a working LED, a failure of this LED (7.1, 7.2, 7.n) is detected, or **in that** the voltage drop across all LEDs (7.1, 7.2, 7.n) is measured by the integrated circuit (6), wherein when the voltage drop lies outside the tolerance limits which corresponds to the voltage drop when no LED (7.1, 7.2, 7.n) has failed, a failure of at least one LED (7.1, 7.2, 7.n) is detected, and wherein the number of failed LEDs (7.1, 7.2, 7.n) is ascertained **in that** the difference between the measured voltage drop and the set value is formed and divided by the set value for the voltage drop at a working LED (7.1, 7.2, 7.n).

10. The method for data communication according to one of the preceding claims, **characterised in that** the data transmitted from the at least one LED module (M, M1, M2, Mn) to the modem (4) contains error messages and/or data of sensors, from a module for wireless data communication and/or from further components, which are integrated into the LED module (M, M1, M2, Mn) or connected thereto and which are supplied with current due to a voltage drop across one or more LEDs (7) of the LED module (M, M1, M2, Mn) or due to energy harvesting by means of a solar cell, a photo diode or a Seebek (Peltier) element or due to the voltage drop at a shunt element or by means of a battery.

11. The method for data communication according to claim 1, **characterised in that** the status of at least one LED (7) and, if sensors and/or further components are integrated into the LED module (M, M1, M2, Mn) or connected thereto, the status of the sensors and/or further components is checked by the integrated circuit (6) integrated into the at least one LED module (M, M1, M2, Mn) at defined periodic intervals, wherein if a malfunction is detected, an error message is generated and communicated to the modem (4) together with the address of the LED module (M, M1, M2, Mn).

12. The method for data communication according to claim 1, **characterised in that** the signals of sensors integrated into or connected to the at least one LED module (M, M1, M2, Mn) are evaluated by the integrated circuit (6) integrated into the at least one LED module (M, M1, M2, Mn) continuously or at periodically specified intervals, wherein when the threshold values for the signals of the sensors are not reached and/or exceeded, a respective message is generated and communicated to the modem (4) together with the address of the LED module (M, M1, M2, Mn).

13. The method for data communication according to claim 12, **characterised in that** if threshold values for the signals of the sensors integrated into an LED module (M, M1, M2, Mn) or connected to an LED module (M, M1, M2, Mn) are not reached and/or exceeded, the at least one LED (7) of the LED module (M, M1, M2, Mn) is switched on by the integrated circuit (6) if it was switched off at this point in time.

14. A system comprising an LED module (M) having at least one LED (7), or several LED modules (M1, M2, Mn) in a series connection of several LED modules (M1, M2, Mn) each having at least one LED (7), wherein an integrated circuit (6) is integrated into each LED module (M, M1, M2, Mn), a current supply line (3) connected to a current regulator (2) for supplying the LED module (M) / the LED modules (M1, M2, Mn) of the series connection with current, a transmitter/receiver module (5) and a modem (4) downstream of the current regulator (2) and connected to the transmitter/receiver module (5) for data communication between the transmitter/receiver module (5) and the LED module (M) / the LED modules (M1, M2, Mn) of the series connection, wherein each LED module (M, M1, M2, Mn) is unequivocally addressed, wherein for data communication from the respective LED module (M, M1, M2, Mn) to the modem (4) data can be modulated onto the current supply line (3) and demodulated by the modem (4), wherein for data communication from the modem (4) to the respective LED module (M, M1, M2, Mn) data can be modulated onto the current supply line (3) and demodulated by the integrated circuit (6), wherein the integrated circuit (6) integrated into each LED module (M, M1, M2, Mn) is supplied with current through energy harvesting by means of a solar cell, a photo diode or a Seebek (Peltier) element, wherein a sensor, a module for wireless data communication and/or further components are integrated into at least one LED module (M, M1, M2, Mn), which are supplied with current through energy harvesting by means of a solar cell, a photo diode or a Seebek (Peltier) element and are connected via a data link to the integrated circuit (6), **characterised in that** each LED module (M, M1, M2, Mn) is configured for triggering an algorithm for failure detection by means of a broadcast command from the modem (4), wherein directly upon triggering the algorithm for failure detection in the LED modules (M1, M2, Mn) a timer is started for a defined period of time, wherein the defined period of time depends on the address of the respective LED module (M, M1, M2, Mn) and is thus unequivocal, wherein when the timer expires the respective LED module (M, M1, M2, Mn) is further configured to transmit data on the status of the LED module (M, M1, M2, Mn) to the modem (4), and wherein, if at the time the timer expires during an associated receive time slot no data is received on the status of the LED module (M, M1, M2, Mn) from an LED module (M, M1, M2, Mn), a failure or an absence of the LED module (M, M1, M2, Mn) is detected.

15. The system for data communication according to claim 14, **characterised in that** the sensor of the at least one LED module (M, M1, M2, Mn) is implemented as a sensor of a group encompassing air quality sensors, smoke detectors, temperature sensors, humidity sensors, microphones, light barriers, magnetometers, gas sensors, movement sensors, distance sensors, pressure sensors, through-flow sensors, current sensors, filling level indicators, moisture sensors, rain sensors, light sensors, brightness sensors, proximity sensors, temperature sensors, radiation detectors, sensors for explosives, acceleration sensors, seismic sensors, image sensors and radar sensors or sensors for detecting persons or moving objects.

## Revendications

1. Procédé de communication de données entre un module d'émission/réception (5) et un module DEL (M) présentant au moins une DEL (7) ou plusieurs modules DEL (M1,M2,Mn) dans une connexion en série entre un module d'émission/réception (5) et des modules DEL (M1,M2,Mn), présentant respectivement au moins une DEL (7), dans lequel chaque module DEL (M,M1,M2,Mn) est alimenté en courant par un régulateur de courant commandé en commun (2) par l'intermédiaire d'une ligne de courant (3), dans lequel au moyen d'un circuit de commutation (6) intégré dans chaque module DEL (M,M1,M2,Mn) pour la transmission de données du module DEL respectif (M,M1,M2,Mn) vers un modem (4) relié au module d'émission/réception (5), branché en aval du régulateur de courant (2) des données sont modulées sur la ligne de courant (3) et démodulées par le modem (4), dans lequel à des fins de transmission de données du modem (4)au module DEL respectif (M, M1, M2, Mn) des données sont modulées sur la ligne de courant (3) et démodulées par le circuit de commutation intégré (6), dans lequel les données du module DEL respectif (M,M1,M2,Mn) au modem (4) sont modulées par une variation de la chute de tension par l'intermédiaire du module DEL (M,M1,M2,Mn) sur la ligne de courant (3) et dans lequel les données à transmettre du modem (4) au module DEL respectif (M,M1,M2,Mn) sont modulées par modulation par déplacement d'amplitude (ASK), dans lequel à des fins de modulation le courant circulant du régulateur de courant (2) par l'intermédiaire de la ligne de courant (3) vers le module DEL respectif (M,M1,M2,Mn) est modulé avec un degré de modulation de m=1, dans lequel les données à transmettre sont codées par codage Manchester, et dans lequel pendant la transmission de données la chute de tension est transmise par l'intermédiaire d'une DEL (7) du module DEL (M,M1,M2,Mn) au circuit de commutation intégré (6), qui reçoit directement les données transmises, dans lequel chaque module DEL (M,M1,M2,Mn) est adressé de manière univoque, **caractérisé en ce que** le procédé comprend les étapes suivantes :
l'élévation linéaire du courant nominal d'au moins un module DEL (M,M1,M2,Mn) pendant la transmission de données du modem (4) vers au moins un module DEL (M,M1,M2,Mn) pour compenser une chute de la puissance lumineuse pendant ce temps,
l'alimentation en courant du circuit de commutation (6) intégré dans chaque module DEL (M,M1,M2,Mn) par captage d'énergie au moyen d'une cellule solaire, une photodiode ou un élément de Seebeck (Peltier),
le déclenchement par l'intermédiaire d'une instruction de diffusion du modem (4) d'un algorithme de détection de panne et
le démarrage directement après le déclenchement de l'algorithme de détection de panne d'un temporisateur pour une durée prescrite dans chaque module DEL (M,M1,M2,Mn), dans lequel la durée prescrite dépend d'une adresse du module DEL respectif (M,M1,M2,Mn) et est donc univoque, dans lequel, lorsque le temporisateur arrive à expiration, le module DEL respectif (M,M1,M2,Mn) transmet des données relatives au statut du module DEL (M,M1,M2,Mn) au modem (4), et dans lequel lorsque au moment de l'expiration du temporisateur pendant un créneau temporel de réception correspondant de l'algorithme aucune données relatives au statut du module DEL (M,M1,M2,Mn) ne sont reçues par un module DEL (M,M1,M2,Mn), une panne ou un dysfonctionnement du module DEL (M,M1,M2,Mn) est détecté.

2. Procédé de communication de données selon la revendication 1, **caractérisé en ce que** la variation de la chute de tension a lieu sur le module DEL (M,M1,M2,Mn) via une variation de la chute de tension sur une DEL (7) du module DEL (M,M1,M2,Mn) par court-circuit périodique de la DEL (7) par l'intermédiaire d'un commutateur, un transistor, un transistor à effet de champ ou un autre composant électrique actif ou par pontage périodique du courant parallèlement à la DEL (7) par l'intermédiaire d'une résistance parallèle ou d'un collecteur de courant.

3. Procédé de communication de données selon la revendication 1, **caractérisé en ce que** la variation de la chute de tension sur le module DEL (M,M1,M2,Mn) a lieu au moyen d'un pontage périodique d'un élément de shunt(10) intégré dans le module DEL (M,M1,M2,Mn) ou au moyen d'un pontage périodique d'une résistance, d'une diode ou d'un autre composant électrique actif au moyen d'un transistor à effet de champ (12), d'un transistor, d'un optocoupleur, d'un thyristor ou d'un autre composant électrique actif.

4. Procédé de communication de données selon a revendication 3, **caractérisé en ce que** à des fins de modulation une tension supplémentaire à la chute est générée sur au moins une DEL (7) du module DEL (M,M1,M2,Mn), **en ce que** un transistor à effet de champ (12) intégré dans un module DEL (M,M1,M2,Mn) est commuté ou désactivé, dans lequel une diode de corps (13) du transistor à effet de champ (12) augmente la tension totale d'une tension supplémentaire prescrite par la diode de corps (13), dans lequel lorsqu'aucune transmission de données n'a lieu, le transistor à effet de champ (12) est commuté, de sorte que la tension totale ne soit pas modifiée et dans lequel une variation de la tension totale est obtenue au moyen de la commande du transistor à effet de champ (12).

5. Procédé de communication de données selon la revendication 2,3 ou 4, **caractérisé en ce que** les données transmises d'au moins un module DEL (M,M1,M2,Mn) vers le modem (4) sont modulées au moyen d'une modulation par déplacement de fréquence (FSK), dans lequel un logique est codé avec 10 kHz et un zéro logique avec 9 Khz.

6. Procédé de communication de données selon la revendication 5, **caractérisé en ce que** le signal modulé est découplé en tension continue au moyen d'un découpleur en tension continue (13), dans lequel au moyen d'un filtre passe-bande branché en aval (14) les fractions de fréquence indésirables sont atténuées, de sorte que seuls les signaux utiles avec une fréquence de 9 et 10 Khz puissent passer, dans lequel au moyen d'un convertisseur analogique-numérique (15) branché en aval du filtre passe-bande (14), le signal utile est échantillonné et une transformation de Fourier rapide est effectuée, pour démoduler le signal.

7. Procédé de communication de données selon la revendication 1, **caractérisé en ce que** le signal modulé est couplé de manière inductive ou par l'intermédiaire d'une capacité.

8. Procédé de communication de données selon la revendication 1, **caractérisé en ce que** dans le cas où un module DEL (M1,M2,Mn) comprend plusieurs DELs (7.1,7.2,7.n), les données transmises de ce module DEL (M1,M2,Mn) au model (4) relatives au statut du module DEL (M1,M2,Mn) contiennent les données relatives au statut des DELs (7.1,7.2,7.n) du module DEL (Ml,M2,Mn) .

9. Procédé de communication de données selon la revendication 8, **caractérisé en ce que** les données relatives au statut des DELs (7.1,7.2,7.n) sont obtenues en mesurant la chute de tension sur chaque DEL (7.1,7.2,7.n) par le circuit de commutation intégré (6), dans lequel les DELs (7.1,7.2,7.n) à l'intérieur d'un module DEL (M1,M2,Mn) sont adressées de manière univoque et dans lequel, lorsqu'une chute de tension est mesurée sur une DEL (7.1,7.2,7.n), qui se situe en dehors des limites de tolérance d'une valeur de consigne, qui correspondant à la chute de tension d'une DEL intacte, une panne de cette DEL (7.1,7.2,7.n) est détectée ou la chute de tension est mesurée par l'intermédiaire de toutes les DELs (7.1,7.2,7.n) par le circuit de commutation intégré (6),dans lequel lorsque la chute de tension se situe en dehors des limites de tolérance d'une valeur de consigne, qui correspond à la chute de tension, lorsqu'une DEL (7.1,7.2,7.n) n'est pas tombée en panne, une panne d'au moins une DEL (7314,7.2,7.n) est détectée et dans lequel le nombre des DELs tombées en panne (7.1,7.2,7.n) est déterminé en formant la différence de la chute de tension mesurée par rapport à la valeur de consigne et en divisant la valeur de consigne pour la chute de tension sur une DEL intacte (7.1,7.2,7.n).

10. Procédé de communication de données selon une des revendications précédentes, **caractérisé en ce que** les données transmises par au moins un module DEL (M,M1,M2,Mn) vers le modem (4) contiennent des rapports d'erreur et/ou des données de capteur, d'un module de communication de données sans fil et/ou d'autres composants, qui sont intégrés dans le module DEL (M,M1,M2,Mn) ou sont connecté à celui-ci et sont alimentés en courant par une chute de tension sur une ou plusieurs DELs (7) du module DEL (M,M1,M2,Mn) ou par captage d'énergie au moyen d'une cellule solaire, une photodiode ou un élément de Seebeck(Peltier) ou par une chute de tension sur un élément de shunt ou au moyen d'une batterie.

11. Procédé de communication de données selon la revendication 1, **caractérisé en ce que** dans des intervalles périodiques prescrits à travers le circuit de commutation (6) intégré dans au moins un module DEL (M,M1,M2,Mn) le statut d'au moins une DEL (7) et lorsque des capteurs ou d'autres composants sont intégrés dans le module DEL (M,M1,M2,Mn) ou connectés à celui-ci, le statut des capteurs et/ou des autres composants est vérifié, dans lequel, lorsqu'une fonction défectueuse est détectée, un message d'erreur est généré et transmis conjointement à l'adresse du module DEL (M,M1,M2,Mn) au modem (4).

12. Procédé de communication de données selon la revendication 1, **caractérisé en ce que** par l'intermédiaire du circuit de commutation intégré (6) dans au moins un module DEL (M,M1,M2,Mn) les signaux de capteurs intégrés dans au moins un module DEL (M,M1,M2,Mn) ou connectés à au moins un module DEL (M,M1,M2,Mn) sont évalués en continu ou à des intervalles périodiques prescrits, dans lequel, lorsque des valeurs de seuil pour les signaux des capteurs sont sous dépassées ou dépassées, un rapport correspondant est généré et transmis conjointement à l'adresse du module DEL (M,M1,M2,Mn) au modem (4).

13. Procédé de communication de données selon la revendication 12, **caractérisé en ce que** lorsque des valeurs de seuil pour les signaux des capteurs intégrés dans un module DEL (M,M1,M2,Mn) ou connectés à un module DEL (M,M1,M2,Mn) sont sous dépassées ou dépassées, au moins une DEL (7) du module de DEL (M,M1,M2,Mn) est mise sous tension par le circuit de commutation intégré (6), lorsqu'elle est hors tension à ce moment.

14. Système, comprenant un module DEL (M), présentant au moins une DEL (7) ou plusieurs modules DEL (M1,M2,Mn) dans une connexion en série de plusieurs modules DEL (M1,M2,Mn), présentant respectivement au moins une DEL (7), dans lequel dans chaque module DEL (M,M1,M2,Mn) un circuit de commutation intégré (6) est intégré, une ligne de courant (3) reliée avec le régulateur de courant (2) pour l'alimentation en courant du module DEL, resp. des modules DEL (M1,M2,Mn) de la connexion en série, un module d'émission/réception (5) et un modem (4) relié au module d'émission/réception (5) et branché en amont du régulateur de courant (2), pour la communication de données entre le module d'émission/réception (5) et le module DEL (M), resp. les modules DEL (M1,M2,Mn) de la connexion en série, dans lequel chaque module DEL(M,M1,M2,Mn) est adressé de manière univoque, dans lequel pour la transmission de données du module DEL respectif (M,M1,M2,Mn)au modem (4) des données peuvent être modulées sur la ligne de courant (3) et démodulées par le modem (4), dans lequel pour la transmission de données du modem (4) à un module DEL respectif (M,M1,M2,Mn) les données peuvent être modulées sur la ligne de courant (3) et démodulées par le circuit de commutation intégré (6), dans lequel le circuit de commutation intégré (6) intégré dans chaque module DEL (M,M1,M2,Mn) est alimenté en courant par captage d'énergie au moyen d'une cellule solaire, une photodiode ou un élément de Seebeck(Peltier), dans lequel dans au moins un module DEL (M,M1,M2,Mn) un capteur, un module de communication de données sans fil et/ou d'autres composants sont intégrés, qui sont alimentés en courant par captage d'énergie au moyen d'une cellule solaire, une photodiode ou un élément de Seebeck(Peltier) et sont reliées en termes de données avec le circuit de commutation (6), **caractérisé en ce que** chaque module DEL(M,M1,M2,Mn) est configuré afin qu'un algorithme de détection de panne puisse être déclenché par une instruction de diffusion du modem (4), dans lequel directement après le déclenchement de l'algorithme de détection de panne dans les modules DEL (M,M1,M2,Mn) un temporisateur est démarré pendant une durée prescrite, dont la durée prescrite dépend de l'adresse du module DEL respectif (M,M1,M2,Mn) et est donc univoque, lorsque le temporisateur arrive à expiration, le module DEL respectif (M,M1,M2,Mn) est en outre configuré afin de transmettre des données relatives au statut du module DEL (M,M1,M2,Mn) au modem (4) et dans lequel lorsque aucunes données relatives au statut du module DEL (M,M1,M2,Mn)ne sont reçues par un module DEL (M,M1,M2,Mn) au moment de l'expiration du temporisateur pendant un créneau temporel de réception correspond de l'algorithme, une panne ou un dysfonctionnement du module DEL (M,M1,M2,Mn) est détecté.

15. Système de communication de données selon la revendication 14, **caractérisé en ce que** le capteur d'au moins un module DEL (M,M1,M2,Mn)est conçu comme un capteur d'un groupe comprenant des capteurs de qualité d'air, des capteurs de fumée, des capteurs de température, des capteurs d'humidité, des microphones, des barrières photo-électriques, des magnétomètres, des capteurs de gaz, des capteurs de mouvement, des capteurs de distance, des capteurs de pression, des capteurs de débit, des capteurs de courant, des capteurs de niveau de remplissage, des détecteurs d'humidité, des capteurs de pluie, des capteurs de lumière, des capteurs de luminosité, des capteurs de proximité, des capteurs de température, des capteurs de rayonnement, des capteurs de substances explosives, des capteurs d'accélération, des capteurs sismiques, des capteurs d'images et des capteurs radar, resp. des capteurs pour la détection de personnes ou d'objets mobiles.
